# EUROPÄISCHE PATENTSCHRIFT

(11) **EP 2 841 775 B1**
(45) Veröffentlichungstag und Bekanntmachung des Hinweises auf die Patenterteilung: **09.05.2018**
(21) Anmeldenummer: 13708469.5
(22) Anmeldetag: 12.03.2013
(51) Int. Cl.: F16B 5/06

(54) **VERFAHREN ZUM VERBINDEN ZWEIER BAUTEILE SOWIE BAUTEILVERBINDUNG**
METHOD FOR CONNECTING TWO COMPONENTS, AND COMPONENT CONNECTION
PROCÉDÉ DE LIAISON DE DEUX ÉLÉMENTS, ET ASSEMBLAGE D'ÉLÉMENTS

(30) Priorität: 26.04.2012 DE 102012206938
(43) Veröffentlichungstag der Anmeldung: 04.03.2015
(73) Patentinhaber: Bayerische Motoren Werke Aktiengesellschaft, 80809 München (DE)
(72) Erfinder: VAN NIEKERK, Johann, 80993 München (DE); MARTIN, Erik, 81477 Muenchen (DE); VIETZE, Eva, 80805 München (DE)
(86) Internationale Anmeldenummer: PCT/EP2013/054932
(87) Internationale Veröffentlichungsnummer: WO 2013/159982

(56) Entgegenhaltungen:
- WO-A1-2011/134563
- DE-A1- 3 232 926
- DE-A1- 4 213 366
- DE-A1-102010 015 179
- DE-A1-102010 041 356
- DE-A1-102011 087 286

## Beschreibung

Die vorliegende Erfindung betrifft ein Verfahren zum Verbinden zweier Bauteile gemäß den Merkmalen des Patentanspruches 1 sowie eine Bauteilverbindung gemäß dem Oberbegriff des Patentanspruchs 2.

Eine Bauteilverbindung gemäß dem Oberbegriff des Patentanspruchs 2 und ein Verfahren zum lösbar Verbinden eines ersten Bauteils mit einem ein Durchgangloch aufweisenden zweiten Bauteil sind aus der DE 32 32 926 A1 bekannt. Zum technischen Hintergrund der Erfindung zählen die DE 42 13 366 A1, DE 10 2010041 356 A1, DE 10 2010 015 179 A1, WO 2011/134563 A1 sowie die ältere, nicht vorveröffentlichte deutsche Patentanmeldung DE 10 2011 080 317.3 sowie die DE 10 2012 203217.7. In der Großserienfertigung von Fahrzeugkarosserien werden eine Vielzahl einzelner Karosserieteile sowie Anbauteile, wie z.B. Halterungen, etc., weitgehend automatisiert zusammengebaut. Bei einem Fügevorgang werden zwei oder mehrere Karosserieteile zunächst mittels aufwändiger Spann- und Aufnahmetechnik relativ zueinander positioniert und anschließend miteinander verbunden, z.B. durch Schweißen, Clinchen oder andere Fügeverfahren.

Aufgabe der Erfindung der Erfindung ist es, ein Verfahren zum Verbinden zweier Bauteile zu das einfach und kostengünstig durchführbar und für eine Großserienfertigung geeignet ist und das zu einer Bauteilverbindung führt, die eine hohe Festigkeit aufweist. Diese Aufgabe wird durch die Merkmale des Patentanspruches 1 bzw. 2 gelöst. Vorteilhafte Ausgestaltungen und Weiterbildungen der Erfindung sind den Unteransprüchen zu entnehmen.

Ausgangspunkt der Erfindung ist es, mindestens zwei (d.h. zwei oder mehr als zwei) miteinander zu verbindende Bauteile mittels eines von einem ersten der beiden Bauteile abstehenden Verbindungselements und eines auf das Verbindungselement aufgeclipsten "Clipelements" form- und/oder reibschlüssig miteinander zu verbinden.

In einem ersten Verfahrensschritt werden die beiden Bauteile aneinander gebracht bzw. relativ zueinander positioniert. Es kann vorgesehen sein, dass die beiden Bauteile einander unmittelbar berühren, d.h. unmittelbar aneinander anliegen. Dies muss aber nicht unbedingt so sein. Die beiden Bauteile könnten prinzipiell auch durch ein oder mehrere Abstandshalter, ein oder mehrere dazwischen angeordnete Bauteile und/oder eine Kleberschicht voneinander beabstandet angeordnet sein.

Nach dem Zusammenbringen und Ausrichten der beiden Bauteile wird mittels einer Positionserkennungselektronik die Lage eines in dem zweiten Bauteil vorgesehenen Durchgangslochs ermittelt. Unter dem Begriff "Lageermittlung" sind ganz allgemein Daten bzw. Informationen zu verstehen, welche die räumliche Lage des in dem zweiten Bauteil vorgesehenen Lochs im Raum bzw. relativ zu dem ersten Bauteil oder zu anderen Referenzgeometrien beschreiben.

Anschließend wird das Verbindungselement in Abhängigkeit von der räumlichen Lage des Lochs bzw. in Abhängigkeit von durch die Positionserkennungselektronik ermittelten Positionsdaten an einer Stelle innerhalb des Lochs platziert. Es kann vorgesehen sein, dass das Verbindungselement dabei das erste Bauteil bzw., genauer gesagt, die dem zweiten Bauteil zugewandte Seite des ersten Bauteils berührt. Vorzugsweise wird das Verbindungselement gegen das erste Bauteil gedrückt.

Es kann vorgesehen sein, dass die Positionserkennungselektronik eine Optoelektronik bzw. ein Kamerasystem aufweist, mittels der bzw. mittels dessen optoelektronisch die räumliche Lage des Lochs detektiert wird. Prinzipiell könnte die die räumliche Lage auch rein elektronisch, mechanisch, hydraulisch oder in anderer Weise detektiert werden.

Nach dem Positionieren des Verbindungselements wird dieses mit dem ersten Bauteil verbunden, so dass es in das Loch hinein oder durch das Loch und somit durch das zweite Bauteil hindurch ragt. Vorzugsweise wird das Verbindungselement mit dem ersten Bauteil verschweißt. In Betracht kommen verschiedene Schweißverfahren, z.B. Laserschweißen, Widerstandstromschweißen, Reibschweißen.

Um eine hohe Fügegenauigkeit zu erreichen, ist es von Vorteil, das Verbindungselement erst nach dem Aneinanderbringen und Positionieren der beiden Bauteile relativ zueinander mit dem ersten Bauteil zu verbinden. Auf diese Weise kann nämlich sichergestellt werden, dass das Verbindungselement exakt mittig in Bezug auf das Loch positioniert wird. Ein weiterer Vorteil ist darin zu sehen, dass zwei Bauteile wesentlich leichter relativ zueinander positionierbar und ausrichtbar sind, wenn hierbei das Verbindungselement noch nicht mit dem ersten Bauteil verbunden ist.

Für eine Großserienfertigung ist es von Vorteil, wenn das Verbindungselement mittels einer elektronisch gesteuerten Schweißeinrichtung (z.B. Schweißroboter) auf das erste Bauteil aufgeschweißt wird.

Nach dem Verbinden des Verbindungselements mit dem ersten Bauteil wird auf das Verbindungselement ein Clipelement aufgeclipst, welches die beiden Bauteile zusammenhält. Beispielsweise kann vorgesehen sein, dass das Clipelement einen hut- oder pilzartigen Kopfabschnitt aufweist, welcher das Loch übergreift und somit das zweite Bauteil in Richtung des ersten Bauteils drückt.

Das erste Bauteil und das Verbindungselement können beispielsweise aus Metall bestehen. Bei dem ersten Bauteil und bei dem Verbindungselement kann es sich beispielsweise um ein Stahl- oder Aluminiumbauteil handeln. Bei dem zweiten Bauteil kann es sich ebenfalls um ein Metallbauteil, z.B. ein Stahl- oder Aluminiumbauteil handeln. Alternativ dazu kann es sich bei dem zweiten Bauteil auch um ein Kunststoffbauteil, insbesondere um ein aus einem faserverstärkten Kunststoffmaterial hergestelltes Bauteil handeln. In Betracht kommen insbesondere Kunststoffbauteile, die durch eingelagerte Kohlefasern, Glasfasern, Metalldrähte o.ä. verstärkt sind.

Das Clipelement kann ganz oder teilweise aus einem Kunststoffmaterial bestehen. Alternativ dazu kann es auch aus Metall oder einem anderen Material bestehen oder aus mehreren Materialien (z.B. mit Kunststoff umspritztes Metallelement). Es muss eine hinreichende Elastizität aufweisen, so dass es auf das Verbindungselement aufgeclipst werden kann und nach dem Aufclipsen daran reibschlüssig und/oder formschlüssig hält. Durch das Clipelement werden die mindestens zwei Bauteile nicht nur zusammengehalten bzw. zusammengeklemmt, sondern auch mit hoher Maßhaltigkeit relativ zueinander positioniert.

Zusätzlich könnten die beiden Bauteile, insbesondere nach dem Zusammenclipsen, miteinander verschweißt werden.

Der oben bereits erwähnte hut- und pilzartige Abschnitt des Clipelements kann elastisch ausgebildet sein, was den Vorteil hat, dass die beiden Bauteile nach dem Aufclipsen des Clipelements spielfrei aneinander gehalten werden können.

Bei bestimmten Anwendungen, insbesondere bei sogenannten Mischbauverbindungen, bei denen ein Metallbauteil mit einem Kunststoffbauteil verbunden wird, kann es sinnvoll bzw. von Vorteil sein, die beiden Bauteile zusätzlich miteinander zu verkleben. Die beiden Bauteile können beispielsweise vor dem Aufclipsen des Clipelements oder bereits vor dem Verbinden des Verbindungselements mit dem ersten Bauteil miteinander verklebt werden.

Das Aufclipsen des Clipelements kann manuell erfolgen. Vorzugsweise wird jedoch auch dieser Verfahrensschritt automatisiert. Hierzu wird mittels einer Positionserkennungselektronik die räumliche Lage des Verbindungselements detektiert. Alternativ dazu kann unter Verwendung der bereits ermittelten, vorliegenden bzw. bekannten Positionsdaten ein automatisiertes Aufclipsen des Clipelements mittels einer Robotereinrichtung erfolgen, wobei es selbstverständlich gilt, die räumliche Lage des Verbindungselements zu berücksichtigen.

Das Verbindungselement der Erfindung besteht aus mehreren miteinander verbundenen kugeligen oder kugelähnlichen Elementen. Das Verbindungselement kann somit aus zwei oder drei dieser Elementen bestehen. Im Falle von drei oder mehr kugeligen oder kugelähnlichen Elementen kann vorgesehen sein, dass diese in einer Reihe hintereinander angeordnet sind. Bei dem Verbindungselement kann es sich um eine Kugel, z.B. um eine Stahl- oder Aluminiumkugel handeln. Der Begriff "Kugel" ist äußerst breit zu interpretieren. Er umfasst nicht nur Verbindungselemente mit einer Kugelgeometrie im streng mathematischen Sinne, sondern auch Teile von Kugeln (Kugelkalotten) oder kugelähnliche Verbindungselemente.

Das Clipelement kann so konzipiert und auf das Verbindungselement aufgeclipst sein, dass es mindestens ein kugeliges oder kugelähnliches Element, vorzugsweise aber mehrere kugelige oder kugelähnliche Elemente des Verbindungselements über - und/oder umgreift. Je mehr kugelige bzw. kugelähnliche Elemente des Verbindungselements von dem Clipelement über- und/oder umgriffen werden, um so höher ist tendenziell die Festigkeit der Bauteilverbindung.

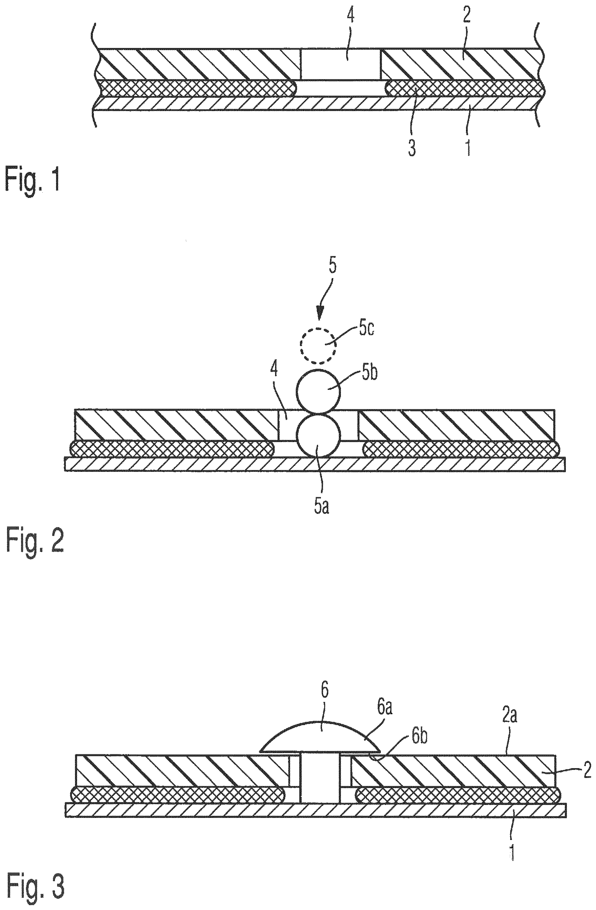

Im Folgenden wird die Erfindung im Zusammenhang mit der Zeichnung näher erläutert. Es zeigen
- Figuren 1 - 3: die einzelnen Schritte, die bei der Herstellung einer Bauteilverbindung gemäß der Erfindung durchlaufen werden.

Figur 1 zeigt ein erstes Bauteil 1, bei dem es sich z.B. um ein Stahlblechbauteil handeln kann. Auf das erste Bauteil 1 ist ein zweites Bauteil 2 aufgebracht, bei dem es sich beispielsweise um ein Kunststoffbauteil, insbesondere um ein faserverstärktes Kunststoffbauteil handeln kann. In Betracht kommen insbesondere Kunststoffbauteile, die durch Kohlefasern- und/oder Glasfasern verstärkt sind. Zwischen die beiden Bauteile 1, 2 ist eine Klebstoffschicht 3 eingebracht, welche die beiden Bauteile 1, 2 miteinander verklebt. Wie aus Figur 1 ersichtlich ist, weist das zweite Bauteil 2 ein Durchgangsloch 4 auf.

Nach dem Aneinanderbringen und Positionieren und Verkleben der beiden Bauteile 1, 2 wird mittels einer hier nicht näher dargestellten Positionserkennungselektronik bzw. mit einem Kamerasystem die räumliche Lage des Lochs 4 detektiert. Wenn die Lage des Lochs 4 bekannt ist, wird mittels einer Positionierungseinrichtung (z.B. Positionierungsroboter) ein Verbindungselement 5 relativ zu dem Loch 4 positioniert. Bei dem in Figur 2 gezeigten Ausführungsbeispiel besteht das Verbindungselement 5 aus zwei miteinander verbundenen kugelförmigen Elementen 5a, 5b. Prinzipiell könnte das Verbindungselement 5 auch aus mehreren in einer Reihe hintereinander angeordneten kugelförmigen Elementen gebildet sein. Die kugelförmigen Elemente 5a, 5c können z.B. aus demselben Material bestehen, wie das erste Bauteil 1, z.B. aus Stahl- oder Aluminium. Die kugelförmigen Elemente 5a - 5c können miteinander verschweißt oder in anderer Weise miteinander verbunden sein. Prinzipiell ist es auch möglich, dass das Verbindungselement 5 mit seinen kugelförmigen Elementen 5a - 5c einstückig hergestellt ist.

Nach dem Positionieren des Verbindungselements 5 wird das Verbindungselement 5 mit dem ersten Bauteil 1 verbunden. Das Verbinden kann z.B. durch Verschweißen erfolgen. Es kann vorgesehen sein, dass Verbindungselement 5 von der Positionierungseinrichtung (nicht dargestellt) hierzu gegen das erste Bauteil 1 gedrückt wird, wodurch eine hohe Schweißqualität erreicht wird.

Wie aus Figur 2 ersichtlich ist, ragt das Verbindungselement 5 nach dem Verbinden mit dem ersten Bauteil 1 in bzw. durch das Loch 4 hindurch.

Anschließend wird auf das Verbindungselement 5 ein Clipelement 6 aufgeclipst, welches eines der kugelförmigen Elemente 5a - 5c oder mehrere der kugelförmigen Elemente 5a - 5c übergreift.

Wie aus Figur 3 ersichtlich ist, weist das Clipelement 6 einen elastischen Klemmbereich 6a auf, der hier die Form eines Huts bzw. eines Pilzes hat. Es kann vorgesehen sein, dass eine Unterseite 6b des elastischen Klemmbereichs, anders als dies in Figur 3 gezeigt ist, gegen eine Oberseite 2a des zweiten Bauteils 2 drückt. Aufgrund der Elastizität des Klemmbereichs 6a kann erreicht werden, dass die beiden Bauteile 1, 2 spielfrei zusammengedrückt werden.

## Patentansprüche

1. Verfahren zum Verbinden eines ersten Bauteils (1) mit einem ein Durchgangsloch (4) aufweisenden zweiten Bauteil (2), mit folgenden Schritten:
• Aneinanderbringen und Positionieren der beiden Bauteile (1, 2) relativ zueinander,
• Detektieren der räumlichen Lage des Lochs (4) mittels einer Positionserkennungselektronik,
• Positionieren eines Verbindungselements (5) in Abhängigkeit von der räumlichen Lage des Lochs (4) bzw. in Abhängigkeit von durch die Positionserkennungselektronik ermittelten Positionsdaten an einer Stelle innerhalb des Lochs (4),
• Verbinden des Verbindungselements (5) mit dem ersten Bauteil (1), so dass das Verbindungselement (5) in das Loch (4) oder durch das Loch (4) hindurch ragt,
• Aufclipsen eines die beiden Bauteile (1, 2) zusammenhaltenden Clipelements (6) auf das Verbindungselement (5).

2. Bauteilverbindung mit
• einem ersten, aus einem Metall bestehenden Bauteil (1), von dem ein an das erste Bauteil (1) angeschweißtes, aus Metall bestehendes Verbindungselement (5) absteht,
• einem zweiten Bauteil (2), welches ein Durchgangsloch (4) aufweist, wobei das Verbindungselement (5) in das Durchgangsloch (4) hinein oder durch das Durchgangsloch (4) hindurch ragt,
• einem auf das Verbindungselement (5) aufgeclipsten Clipelement (6), welches das Durchgangsloch (4) formschlüssig übergreift und die beiden Bauteile (1, 2) zusammenklemmt,
**dadurch gekennzeichnet, dass**
• das Verbindungselement (5) mehrere miteinander verbundene kugelige oder kugelähnliche Elemente (5a - 5c) aufweist, wobei
• das Clipelement (6) form- und/oder reibschlüssig mehrere kugelige oder kugelähnliche Elemente (5a - 5c), des Verbindungselements (5) über-/oder umgreift.

3. Verfahren nach Anspruch 1,
**dadurch gekennzeichnet, dass** die Positionserkennungselektronik eine Optoelektronik aufweist, mittels der optoelektronisch die räumlichen Lage des Durchgangslochs (4) detektiert wird.

4. Verfahren bzw. Bauteilverbindung nach einem der vorangehenden Ansprüche,
**dadurch gekennzeichnet, dass** die beiden Bauteile (1, 2) miteinander verklebt sind bzw. dass die beiden Bauteile (1, 2) vor dem Aufclipsen des Clipelements (6) bzw. vor dem Verbinden des Verbindungselements (5) mit dem ersten Bauteil (1) miteinander verklebt werden.

5. Verfahren nach einem der vorangehenden Ansprüche,
**dadurch gekennzeichnet, dass** das Verbindungselement (5) mittels einer elektronisch gesteuerten Schweißeinrichtung auf das erste Bauteil (1) aufgeschweißt wird.

6. Verfahren nach einem der vorangehenden Ansprüche,
**dadurch gekennzeichnet, dass** das Aufclipsen manuell erfolgt.

7. Verfahren nach einem der Ansprüche 1, 3, 4 oder 5,
**dadurch gekennzeichnet, dass** die räumliche Lage des Verbindungselements (5) mittels einer Positionserkennungselektronik detektiert wird oder unter Verwendung der Positionsdaten ermittelt wird und das Clipelement (6) mittels einer Robotereinrichtung unter Berücksichtigung der räumlichen Lage des Verbindungselements (5) auf das Verbindungselement (5) automatisch aufgeclipst wird.

8. Bauteilverbindung nach einem der vorangehenden Ansprüche, **dadurch gekennzeichnet, dass** das Clipelement (6) einen elastischen Klemmbereich (6a) aufweist, der an einer dem ersten Bauteil (1) abgewandten Seite des zweiten Bauteils anliegt und dieses gegen das erste Bauteil (1) drückt.

9. Bauteilverbindung nach einem der Ansprüch 1 bis 8,
**dadurch gekennzeichnet, dass** das Verbindungselement (5) genau zwei kugelige oder kugelähnliche Elemente (5a, 5b) aufweist.

10. Bauteilverbindung nach einem der Ansprüche 1 bis 8,
**dadurch gekennzeichnet, dass** das Verbindungselement (5) mehr als zwei kugelige oder kugelähnliche Elemente (5a - 5c) aufweist, die in einer Reihe hintereinander angeordnet sind.

11. Bauteilverbindung nach einem der vorangehenden Ansprüche,
**dadurch gekennzeichnet, dass** das zweite Bauteil aus einem Kunststoffmaterial besteht, insbesondere aus einem faserverstärkten Kunststoffmaterial.

## Claims

1. A method for connecting a first component (1) to a second component (2) having a through-hole (4), having the following steps:
• bringing together and positioning the two components (1, 2) relative to each other,
• detecting the spatial position of the hole (4) by means of position detection electronics,
• positioning a connecting element (5) at a point within the hole (4) as a function of the spatial position of the hole (4) or as a function of position data ascertained by the position detection electronics,
• connecting the connecting element (5) to the first component (1), so that the connecting element (5) projects into the hole (4) or through the hole (4),
• clipping a clip element (6) which holds the two components (1, 2) together onto the connecting element (5).

2. A component connection, having
• a first component (1) consisting of a metal, from which a connecting element (5) welded onto the first component (1) and consisting of metal protrudes,
• a second component (2) which has a through-hole (4), the connecting element (5) projecting into the through-hole (4) or through the through-hole (4),
• a clip element (6) clipped onto the connecting element (5), which element reaches across the through-hole (4) in a positive fit and clamps the two components (1, 2) together,
**characterised in that**
• the connecting element (5) has a plurality of spherical or sphere-like elements (5a - 5c) connected together, wherein
• the clip element (6) reaching across or around a plurality of spherical or sphere-like elements (5a - 5c) of the connecting element (5) in a positive fit and/or in a frictional manner.

3. A method according to Claim 1,
**characterised in that** the position detection electronics have an optoelectronic system, by means of which the spatial position of the through-hole (4) is detected optoelectronically.

4. A method or component connection according to one of the preceding claims,
**characterised in that** the two components (1, 2) are glued together or **in that** the two components (1, 2) are glued together prior to the clipping-on of the clip element (6) or prior to the connecting of the connecting element (5) to the first component (1).

5. A method according to one of the preceding claims,
**characterised in that** the connecting element (5) is welded onto the first component (1) by means of an electronically controlled welding means.

6. A method according to one of the preceding claims,
**characterised in that** the clipping-on takes place manually.

7. A method according to one of Claims 1, 3, 4 or 5,
**characterised in that** the spatial position of the connecting element (5) is detected by means of position detection electronics or is ascertained using the position data and the clip element (6) is automatically clipped onto the connecting element (5) by means of a robot device, taking into account the spatial position of the connecting element (5).

8. A component connection according to one of the preceding claims,
**characterised in that** the clip element (6) has an elastic clamping region (6a) which lies against a side of the second component which is remote from the first component (1) and presses it against the first component (1).

9. A component connection according to one of Claims 1 to 8,
**characterised in that** the connecting element (5) has precisely two spherical or sphere-like elements (5a, 5b).

10. A component connection according to one of Claims 1 to 8,
**characterised in that** the connecting element (5) has more than two spherical or sphere-like elements (5a - 5c) which are arranged in a row one behind another.

11. A component connection according to one of the preceding claims,
**characterised in that** the second component consists of a plastics material, especially of a fibre-reinforced plastics material.

## Revendications

1. Procédé d'assemblage d'une première pièce (1) et d'une seconde pièce (2) comportant un perçage traversant (4) comprenant les étapes suivantes consistant à :
- mettre côte-à-côté et positionner les deux pièces (1, 2) l'une par rapport à l'autre,
- détecter la position dans l'espace du perçage (4) au moyen d'une électronique d'identification de position,
- positionner un élément de liaison (5) en fonction de la position dans l'espace du perçage (4) ou en fonction de données de position déterminées par l'électronique d'identification de la position sur un emplacement situé à l'intérieur du perçage (4),
- assembler l'élément de liaison (5) avec la première pièce (1) de sorte que l'élément d'assemblage (5) pénètre dans le perçage (4) ou passe au travers du perçage (4),
- enclipser un élément d'enclipsage (6) maintenant ensemble les deux pièces (1, 2) sur l'élément de liaison (5).

2. Assemblage de pièces comportant :
- une première pièce (1) réalisée en un métal d'où dépasse un élément d'assemblage (5) réalisé en métal soudé sur la première pièce (1),
- une seconde pièce (2) qui comporte un perçage traversant (4), l'élément d'assemblage (5) pénétrant dans le perçage traversant (4) ou passant au travers de ce perçage (4),
- un élément d'enclipsage (6) enclipsé sur l'élément d'assemblage (5) qui vient en prise par une liaison par la forme sur le perçage traversant (4) et bloque les deux pièces (1, 2),
**caractérisé en ce que**
l'élément d'assemblage (5) comporte plusieurs éléments sphériques ou similaires à une sphère (5a-5c) assemblés entre eux,
- l'élément d'enclipsage (6) vient en prise par une liaison par la forme et/ou par friction sur ou autour de plusieurs éléments sphériques ou similaires à une sphère (5a-5c) de l'élément d'assemblage (5).

3. Procédé conforme à la revendication 1,
**caractérisé en ce que**
l'électronique d'identification de position comporte une électronique optique permettant de détecter la position dans l'espace du perçage traversant (4) par des moyens optoélectroniques.

4. Procédé ou assemblage des pièces conforme à l'une des revendications précédentes,
**caractérisé en ce que**
les deux pièces (1, 2) sont collées, l'une à l'autre ou collées l'une à l'autre avant l'enclipsage de l'élément d'enclipsage (6) ou avant l'assemblage de l'élément d'assemblage (5) avec la première pièce (1).

5. Procédé conforme à l'une des revendications précédentes,
**caractérisé en ce que**
l'élément d'assemblage (5) est soudé sur la première pièce (1) au moyen d'un dispositif de soudage à commande électronique.

6. Procédé conforme à l'une des revendications précédentes,
**caractérisé en ce que**
l'enclipsage est effectué manuellement.

7. Procédé conforme à l'une des revendications 1, 3, 4 ou 5,
**caractérisé en ce que**
la position dans l'espace de l'élément d'assemblage (5) est détectée au moyen d'une électronique d'identification de position ou est déterminée en utilisant des données de position, et l'élément d'enclipsage (6) est enclipsé automatiquement sur l'élément d'assemblage (5) au moyen d'un dispositif robotisé en prenant en considération la position dans l'espace de cet élément d'assemblage (5).

8. Assemblage de pièces conforme à l'une des revendications précédentes,
**caractérisé en ce que**
l'élément d'enclipsage (6) comporte une zone de serrage élastique (6a) qui s'applique sur le côté de la seconde pièce opposé à la première pièce (1) et le comprime contre la première pièce (1).

9. Assemblage de pièces conforme à l'une des revendications 1 à 8,
**caractérisé en ce que**
l'élément d'assemblage (5) comporte exactement deux éléments sphériques ou similaires à une sphère (5a, 5b).

10. Assemblage de pièces conforme à l'une des revendications 1 à 8,
**caractérisé en ce que**
l'élément d'assemblage (5) comporte plus de deux éléments sphériques ou similaires à une sphère (5a, 5c) qui sont montés les uns derrière les autres selon une rangée.

11. Assemblage de pièces conforme à l'une des revendications précédentes,
**caractérisé en ce que**
la seconde pièce est réalisée en un matériau synthétique, en particulier en un matériau synthétique renforcé par des fibres.
